# EUROPEAN PATENT SPECIFICATION

(11) **EP 1 462 200 B1**
(45) Date of publication and mention of the grant of the patent: **22.11.2006**
(21) Application number: 04075789.0
(22) Date of filing: 11.03.2004
(51) Int. Cl.: B23D 25/04

(54) **A machine for continuous-cycle shearing of moving welded tubes**
Vorrichtung zum Durchlauf-Scheren von bewegten geschweissten Rohren
Machine pour la coupe en cycle continu d'un tube soudé en déplacement

(30) Priority: 27.03.2003 IT MO20030087
(43) Date of publication of application: 29.09.2004
(73) Proprietor: Oto Mills S.p.A., 42022 Boretto (Reggio Emilia) (IT)
(72) Inventor: Chezzi, Aleardo, 42022 Boretto (Reggio Emilia) (IT)
(74) Representative: Gotra, Stefano

(56) References cited:
- DE-A- 19 504 152
- US-A- 4 739 490

## Description

Machines for Continuous-Cycle Shearing of Moving Welded Tubes are usually applied in production lines for welded tubes (see e.g. DE-A-195 04 152). The lines continuously produce tubes starting from reels of steel ribbon (or other materials). The ribbon has a breadth which is equal to the circumference, or generally speaking the peripheral development of the tube to be manufactured and is wound on a reel positioned at a start of a line, at an unreeling station. The immediately subsequent station to the unreeling station is a facing machine at which at the end of the reel the ribbon is welded to the start of the next reel. The ribbon is then wound on an accumulator which allows enough time for the reels to be spliced and be unwound continuously. From the accumular the ribbon passes on to the forming machine, where a series of forming heads bend the ribbon longitudinally until it takes on a tube-shape, and is then closed by longitudinal welding made along the generatrix of the tube, where the side edges of the ribbon touch. Once the welding waste has been cleaned away, in a continuous operation, the tube goes to the cutting machine, where it is transversally sectioned and made into a series of tubes of a desired length.

The shearing machine typically comprises a conveyor for continuously transporting the welded tube parallel to which a slide bearing the cutting devices runs in a continuous forward-backward movement; the cutting device is generally a mill. The shearing operation is done at a tract of the outward run of the slide, during which the slide moves at a same velocity as the tube. Once the cutting operation has been concluded, the slide reverses and performs a return run, immediately commencing an outward run so as to make another cutting operation on the moving tube.

During both the outward and return runs the slide experiences an acceleration stage, a constant-velocity stage and a deceleration stage, at the end of which movement direction is inverted. The speed/time parameter is trapezoid, with an acceleration ramp, a constant-speed horizontal tract and a descending deceleration tract. To limit bumps and vibrations on the system, the accelerations of the slide have to be limited, opting for a motion profile in which the acceleration is progressive and continuous over time. For this purpose the passages, from the acceleration tract to the constant speed tract and then to the deceleration tract are "softened" with second-degree polynomial curves, which produce a speed profile which, when derived, gives a trapezoid acceleration profile.

A trapezoid acceleration profile does not however sufficiently limit bumps and vibration on the system, especially in the most common applications in which the motion is transmitted to the slide by a belt. The intrinsic elasticity of the belt causes elastic energy accumulation and release problems, especially during the slide deceleration stages, when the belt "relaxes", and then when the acceleration stage begins and there are build-ups leading to problems of inertia mass control. These phenomena cannot be attenuated with trapezoid acceleration profiles.

The main aim of the present invention is to provide a machine according to claim 1 for speed-shearing in welded tubes in a continuous cycle, which overcomes the above-cited drawbacks.

An advantage of the machine of the invention is that it keeps bumps and vibrations down to a minimum in view of the geometry and dynamics of the cut.

Further characteristics and advantages of the present invention will better emerge from the detailed description that follows of a preferred but non-exclusive embodiment of a machine for continuous-cycle shearing of moving welded tubes, illustrated purely by way of a non-limiting example in the accompanying figures of the drawings, in which:
figure 1 is a simplified perpective-view diagram of the machine;
figure 2 shows sample graphs relating to time/velocity, acceleration and jerk;
figure 3 shows some comparison graphs demonstrating errors of position, speed and acceleration in view of a traditional law of motion (a) and a law of motion according to the present invention (b).

As previously described, the machine makes a running shear, i.e. the cut is performed on a tube 10 which is in continuous motion at a constant speed. The machine therefore comprises a conveyor system 1 for the continuous and constant-speed travel of the tube 10 in a longitudinal direction thereof, and a cutting slide 2 which supports shearing devices 3 for transversally sectioning the tube 10 into successive tracts of tube. The cutting slide 2 is controlled by means for activating 4 which cause the slide to move in a linear direction which is parallel to the longitudinal motion direction of the tube 10. The motion is continuous between an initial position and a final position and comprises an outward run, from the initial position to the final position, at least a tract of which is in synchrony with the tube advancement speed, during which tract the tube 10 is sectioned, and a return run, following which the cutting slide 2 is brought back into the initial position. Both the outward run and the return run comprise a tract of acceleration, a constant-velocity tract and a tract of deceleration.

A cutting cycle begins from the initial position of the cutting slide 2. From here the cutting slide 2 accelerates up until it reaches the tube 10 motion speed. Once this speed has been reached, the cutting slide is in synchrony with the tube 10, effectively moving at the same speed thereas. The shearing devices 3 start the transversal cut of the tube 10, which is performed while the tube 10 is moving. Once the cut has been completed, the cutting slide 2 slows down until it actually changes direction, i.e. at an endrun point thereof. Without pausing, the cutting slide 2 begins the return run, which is done at a constant velocity with an initial acceleration and a final deceleration, up until the initial position is once more reached, and the whole cycle recommences.

To limit the bumps and vibrations on the machine and the transmission system in particular, the accelerations the moving parts are subjected to have to be limited, and especially brusque or jerky accelerations have to be avoided. In the law of motion imposed on the slide acceleration is a derivable function and the derivation, i.e. the jerk is in fact a continuous process. Advantageously the motion imposed on the cutting slide 2 includes a velocity profile on the basis of which the passages from the acceleration tracts to the constant velocity tracts and thence to the deceleration tracts connect with sinusoidal curves.

In a further embodiment a similar motion imposed on the cutting slide 2 includes a velocity profile on the basis of which the passages from the acceleration tracts to the constant velocity tracts and thence to the deceleration tracts connect with seventh-degree polynomial curves .

The theoretical law of motion, which exhibits the above-cited characteristics, becomes concrete motion with effective and determined velocity and acceleration values by means of a microprocessor which is connected to or integrated with the means for activating 4. To correctly define the law of motion at least five fundamental parameters are needed: the maximum run available for the cutting slide 2; the maximum acceleration that can be imposed on the cutting slide 2; the length of the material to be cut the cutting time; the maximum return velocity that can be imposed on the cutting slide 2. Starting from the above data, from the signal of an encoder detecting the velocity and the position of the material to be cut (tube or profile), and from the signal of an encoder which detects the velocity and position of a motor which accelerates the cutting slide 2, the microprocessor defines a law of motion in which the cut is made at the maximum possible line velocity. In particular, among the results obtained by the microprocessor, the value of the acceleration space of the outward run is very important, which coincides with the deceleration space of the return run. After the acceleration space there is the space during which the cutting slide 2 runs at a constant velocity and during which the cut is effected. This corresponds to the line speed multiplied by the cutting time. The outward run is terminated by the deceleration stage, which is followed by the return run, optimized for the end of the cycle i.e. the return run is terminated at exactly the moment at which a new outward run commences.

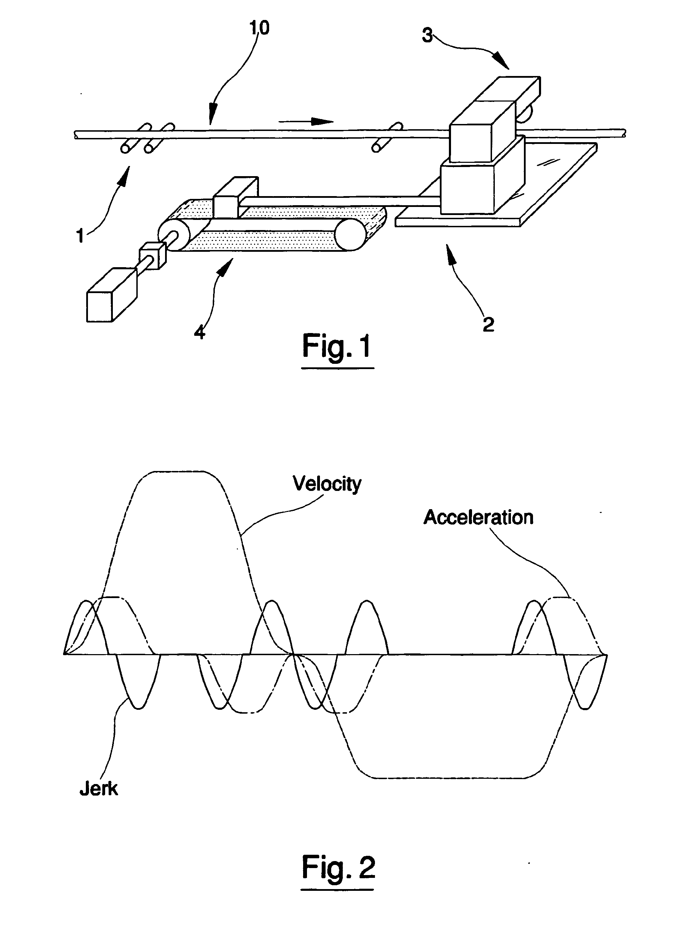

To illustrate what is described above, figure 2 shows a graph evidencing the velocity, acceleration and jerk profiles relating to the curve of motion described. As can be seen the progresses of the three elements are continuous over time and are free of brusque variations.

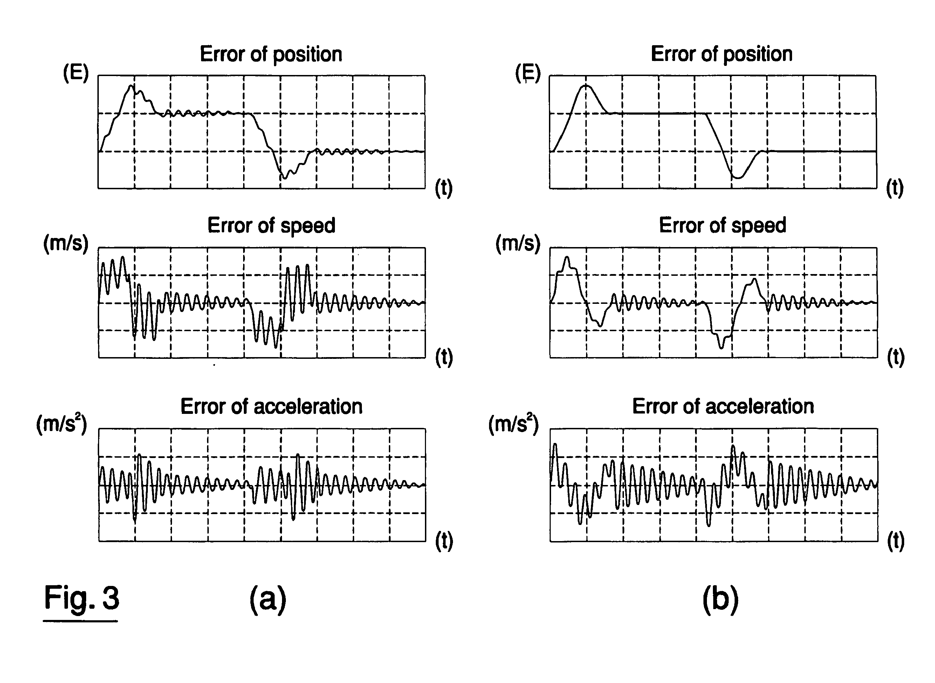

To demonstrate the advantages obtainable from the use of the invention with respect to the prior art, figure 3 shows a comparison between some simulation graphs of traditional motion with trapezoid velocity profiles connected with second-degree polynomial curves (curves a) and the law of motion according to the present invention, with trapezoid velocity profiles connected with sinusoidal curves (curves b).

The graphs illustrate the position, velocity and acceleration errors which indicate the stability and system-response readiness. From an analysis of the graphs it can be seen how in the curve of motion of the present invention the oscillations of position and velocity, which translate into machine vibrations, are considerably smaller than those of the prior art.

The invention offers important advantages. Firstly, it enables optimisation of the slope of all the acceleration and deceleration ramps, so that during the cycle only the minimum accelerations are necessary. This means a considerable reduction in the machine's energy consumption, and also a reduction in the mechanical stress on the transmission system and the machine. The invention also enables an optimisation of the return velocity, reducing it to the minimum necessary for closing the cycle. A further important advantage is the "softness" of the acceleration and deceleration ramps, with a consequent elimination of discontinuities of acceleration during inversion of direction.

## Claims

1. A machine for continuous-cycle shearing of moving welded tubes, comprising:
- a conveyor system (1) for continuously supplying a tube (10) at a constant velocity and in a longitudinal direction of the tube (10);
- a cutting slide (2) which bears shearing devices (3) predisposed to section the tube (10) transversally and in successive tracts thereof;
- means for activating (4) which impose a linear alternating motion on the cutting slide (2) without pausing, between an initial position and a final position along a parallel direction with respect to the longitudinal direction of transport of the tube (10); the linear alternating motion comprises an outward run, from the initial position to the final position, at least a tract of which occurs in synchrony with an advancement of the tube (10) and during which the tube (10) is sectioned, and a return run, following which the cutting slide (2) is brought back into the initial position; both the outward run and the return run comprise an acceleration tract, a constant velocity tract and a deceleration tract; said means for activating (4) imposing on the cutting slide (2) an alternating linear motion with no pauses following a law of motion in which acceleration is a derivable function;
**characterised in that** it further comprises:
- a first encoder for detecting the velocity and the position of the material to be cut ;
- a second encoder for defecting the velocity and position of a motor which accelerates the cutting slide (2); and
- a microprocessor, connected to or integrated with the means for activating (4), for making the theoretical law of motion, which exhibits the above-cited characteristics, concrete motion with effective and determined velocity and acceleration values
wherein, to define a law of motion in which the cut is made at the maximum possible line velocity, said microprocessor uses the signals of said first and second encoders, as well as at least five fundamental parameters needed to correctly define the law of motion: the maximum run available for the cutting slide (2); the maximum acceleration that can be imposed on the cutting slide (2); the length of the material to be cut; the cutting time; and the maximum return velocity that can be imposed on the cutting slide (2).

2. The machine of claim 1, **characterised in that** in the law of motion imposed on the cutting slide (2), the derived acceleration function progresses continuously over time.

3. The machine of claim 1, **characterised in that** the law of motion imposed on the cutting slide (2) includes a velocity profile in which passages from the acceleration tract to the constant-velocity tract and passages from the constant-velocity tract to the deceleration tract occur with sinusoidal curves of connection.

4. The machine of claim 1, **characterised in that** the law of motion imposed on the cutting slide (2) includes a velocity profile in which passages from the acceleration tract to the constant-velocity tract and passages from the constant-velocity tract to the deceleration tract occur in seventh-degree polynomial curves of connection.

## Patentansprüche

1. Vorrichtung zum Durchlauf-Scheren von bewegten geschweißten Rohren, umfassend:
- ein Transportsystem (1) für die ständige Zulieferung eines Rohrs (10) bei konstanter Geschwindigkeit und in einer Längsrichtung des Rohrs (10);
- einen Schneideschlitten (2), der Schervorrichtungen (3) trägt, die so eingerichtet sind, dass sie das Rohr (10) quer und in aufeinander folgende Abschnitte davon durchtrennen;
- Antriebsmittel (4), die auf dem Schneideschlitten (2) unterbrechungslos eine lineare Wechselbewegung zwischen einer Anfangsposition und einer Endposition entlang einer parallelen Richtung in Bezug auf die Längsrichtung des Transports des Rohrs (10) bewirken; die lineare Wechselbewegung umfasst eine Hinfahrt von der Anfangsposition zur Endposition, wovon mindestens ein Abschnitt synchron mit dem Vorschub des Rohrs (10) erfolgt und während der das Rohr (10) durchtrennt wird, und eine Rückfahrt, auf der der Schneideschlitten (2) zurück zur Anfangsposition gefahren wird; sowohl die Hinfahrt als auch die Rückfahrt umfassen einen Beschleunigungsabschnitt, einen Abschnitt bei konstanter Geschwindigkeit und einen Bremsabschnitt; die genannten Antriebsmittel (4) bewirken auf dem Schneideschlitten (2) eine unterbrechungslose lineare Wechselbewegung gemäß einem Bewegungsgesetz, bei dem die Beschleunigung eine abgeleitete Funktion ist;
- **dadurch gekennzeichnet, dass** sie weiterhin umfasst:
- einen ersten Messwertgeber für die Erfassung der Geschwindigkeit und der Position des zu schneidenden Materials;
- einen zweiten Messwertgeber für die Erfassung der Geschwindigkeit und der Position eines Motors, der den Schneideschlitten (2) beschleunigt; und
- einen Mikroprozessor, der an die Antriebsmittel (4) angeschlossen ist oder in diese integriert werden muss, um das theoretische Bewegungsgesetz umzusetzen, das die oben genannten Eigenschaften, konkrete Bewegung mit effektiven und festgesetzten Geschwindigkeits- und Beschleunigungswerten aufweist;
wobei der genannte Mikroprozessor zur Bewirkung eines Bewegungsgesetzes, bei dem der Schnitt bei der höchst möglichen Anlagengeschwindigkeit erfolgt, die Signale des genannten ersten und zweiten Messwertgebers verwendet sowie mindestens fünf grundlegende Parameter, die erforderlich sind, um den für den Schneideschlitten (2) maximal zur Verfügung stehenden Fahrweg korrekt festzulegen; die maximale Beschleunigung, die auf dem Schneideschlitten (2) bewirkt werden kann; die Länge des zu schneidenden Materials; die Schneidezeit und die maximale Rückfahrgeschwindigkeit, die dem Schneideschlitten (2) vorgeschrieben werden kann.

2. Vorrichtung nach Anspruch 1, **dadurch gekennzeichnet, dass** die abgeleitete Beschleunigungsfunktion bei dem auf dem Schneideschlitten (2) bewirkten Bewegungsgesetz einen zeitlich dauerhaften Verlauf hat.

3. Vorrichtung nach Anspruch 1, **dadurch gekennzeichnet, dass** das auf dem Schneideschlitten (2) bewirkte Bewegungsgesetz ein Geschwindigkeitsprofil beinhaltet, bei dem Übergänge vom Beschleunigungsabschnitt zum Abschnitt der konstanten Geschwindigkeit und Übergänge vom Abschnitt der konstanten Geschwindigkeit zum Bremsabschnitt mit Sinus-Verbindungskurven erfolgen.

4. Die Vorrichtung nach Anspruch 1, **dadurch gekennzeichnet, dass** das auf dem Schneideschlitten (2) bewirkte Bewegungsgesetz ein Geschwindigkeitsprofil beinhaltet, bei dem Übergänge vom Beschleunigungsabschnitt zum Abschnitt der konstanten Geschwindigkeit und Übergänge vom Abschnitt der konstanten Geschwindigkeit zum Bremsabschnitt in polynomialen Verbindungskurven des siebten Grads erfolgen.

## Revendications

1. Machine pour la coupe en cycle continu de tubes soudés en déplacement, comprenant:
- un système de convoyage (1) pour alimenter en continu un tube (10) à une vitesse constante et dans une direction longitudinale du tube (10);
- un chariot de coupe (2) supportant des dispositifs de coupe (3) prédisposés pour sectionner le tube (10) transversalement et en morceaux successifs;
- des moyens d'activation (4) qui imposent un mouvement alternatif linéaire au chariot de coupe (2) sans pause, entre une position initiale et une position finale le long d'une direction parallèle par rapport à la direction longitudinale de transport du tube (10); le mouvement alternatif linéaire comprend une course vers l'extérieur, de la position initiale à la position finale, au moins une partie de laquelle se produisant en synchronisme avec une avancée du tube (10) et pendant laquelle le tube (10) est sectionné, et une course de retour, suivant laquelle le chariot de coupe (2) est ramené dans la position initiale; aussi bien la course vers l'extérieur que la course de retour comprennent une partie d'accélération, une partie à vitesse constante et une partie de décélération; lesdits moyens d'activation (4) imposant sur le chariot de coupe (2) un mouvement linéaire alternatif sans pauses suivant une loi de mouvement selon laquelle l'accélération est une fonction dérivable;
**caractérisée en ce qu'**elle comprend en outre:
- un premier encodeur pour la détection de la vitesse et de la position du matériel à couper;
- un second encodeur pour détecter la vitesse et la position d'un moteur qui accélère le chariot de coupe (2); et
- un microprocesseur connecté ou intégré aux moyens d'activation (4), pour faire de la loi de mouvement théorique, qui présente les caractéristiques citées ci-dessus, un mouvement concret avec une vitesse et des valeurs d'accélération déterminées et effectives;
dans laquelle, pour définir une loi de mouvement dans laquelle la coupe est réalisée à la vitesse de ligne la plus maximale possible, ledit microprocesseur utilise les signaux desdits premiers et seconds encodeurs, ainsi qu'au moins cinq paramètres fondamentaux nécessaires pour définir la loi de mouvement: la course maximum disponible sur le chariot de coupe (2); l'accélération maximum pouvant être imposée au chariot de coupe (2); la longueur du matériel à couper; le temps de coupe; et la vitesse de retour maximum pouvant être imposée au chariot de coupe (2).

2. Machine selon la revendication 1, **caractérisée en ce que** dans la loi de mouvement imposée au chariot de coupe (2), la fonction d'accélération dérivée progresse en continu dans le temps.

3. Machine selon la revendication 1, **caractérisée en ce que** la loi de mouvement imposée au chariot de coupe (2) comprend un profil de vitesse dans lequel les passages de la partie d'accélération à la partie de vitesse constante et les passages de la partie à vitesse constante à la partie à décélération se produisent avec des courbes de connexion sinusoïdales.

4. Machine selon la revendication 1, **caractérisée en ce que** la loi de mouvement imposée au chariot de coupe (2) comprend un profil de vitesse dans lequel-les passages de la partie d'accélération à la partie à vitesse constante et les passages de la partie à vitesse constante à la partie de décélération se produisent dans des courbes de connexion polynomiales de septième degré.
